# FASCICULE DE BREVET EUROPEEN

(11) **EP 3 006 763 B1**
(45) Date de publication et mention de la délivrance du brevet: **19.02.2020**
(21) Numéro de dépôt: 15188554.8
(22) Date de dépôt: 06.10.2015
(51) Int. Cl.: F16D 65/097

(54) **RESSORT DE RAPPEL ÉLASTIQUE D'UN PATIN DE FREINAGE COMPORTANT DES MOYENS DE RATTRAPAGE DU JEU D'USURE, FREIN À DISQUE ET KIT DE REMPLACEMENT**
ELASTISCHE RÜCKHOLFEDER EINES BREMSBELAGS, DIE AUSGLEICHSMITTEL DES VERSCHLEISSSPIELS UMFASST, SCHEIBENBREMSE UND ERSATZTEILKIT
RETURN SPRING OF A BRAKE SHOE INCLUDING WEAR PLAY COMPENSATION MEANS, DISK BRAKE AND REPLACEMENT KIT

(30) Priorité: 10.10.2014 FR 1459731
(43) Date de publication de la demande: 13.04.2016
(73) Titulaire: Chassis Brakes International B.V., 5656 AG Eindhoven (NL)
(72) Inventeur: FOUCOIN, Alexandre, 77144 Montevrain (FR); MONTEGU, Didier, 93190 Livry Gargan (FR); MERRIEN, Sandra, 75020 Paris (FR)
(74) Mandataire: Brevalex

(56) Documents cités:
- EP-A1- 2 072 850
- WO-A1-2014/029840
- WO-A1-2014/050811
- US-A- 5 687 817
- US-A1- 2010 243 389

## Description

### DOMAINE TECHNIQUE DE L'INVENTION

L'invention se rapporte à un frein à disque de véhicule automobile.

L'invention se rapporte notamment à un ressort de rappel élastique d'un patin de freinage comportant des moyens de rattrapage, par déformation plastique, du jeu d'usure d'une garniture de friction du patin de freinage.

### ARRIERE PLAN TECHNIQUE DE L'INVENTION

L'invention se rapporte plus particulièrement à un frein à disque de véhicule automobile du type décrit et représenté dans la demande de brevet français FR-A1-3004500 qui comporte :
- un disque de frein qui s'étend dans un plan transversal à un axe d'orientation axiale de rotation du disque ;
- un support fixe par rapport à un châssis du véhicule ;
- au moins un patin de freinage dont chacun comporte une garniture de friction dont une face transversale de friction coopère avec une piste de freinage associée du disque, le patin de freinage étant monté coulissant axialement dans le support entre une position avant active dans laquelle la face de friction est en appui contre la piste annulaire associée du disque, et une position arrière inactive dans laquelle la face de friction est espacée axialement de la piste annulaire associée du disque, d'un jeu déterminé de fonctionnement ;
- au moins un ressort de rappel élastique du patin de freinage vers sa position inactive, qui est par exemple interposé entre le patin de freinage et le support.

Dans un frein à disque, le coulissement des patins de freinage vers leur position active est commandé par un piston. Les deux patins de freinage pincent alors fortement le disque pour ralentir sa rotation. L'opération de freinage est ainsi une opération active.

Les patins de freinage sont repoussés vers leur position inactive par le disque en rotation. Il s'agit donc d'une opération passive.

Il arrive cependant que le disque ne repousse pas les patins de freinage avec suffisamment de force pour les écarter à distance suffisante du disque. Ceci peut par exemple se produire lorsque le coulissement des patins de freinage est de qualité insuffisante, voire grippé, ou bien si la conception crée de la « restitution ».

Bien que les patins de freinage ne soient plus serrés activement contre le disque, chacune des pistes annulaires de ce dernier frotte néanmoins en permanence contre la garniture de friction portée par le patin de freinage associé. Les garnitures de friction subissent ainsi une usure non fonctionnelle prématurée.

De plus, ce frottement permanent est susceptible de provoquer un échauffement dommageable pour certains organes du frein à disque.

Ce frottement permanent provoque aussi l'apparition d'un couple résiduel qui s'oppose à la rotation du disque. Ceci augmente la consommation du véhicule, tout en diminuant les performances du véhicule.

Pour résoudre ces problèmes d'usure et d'échauffement, le document mentionné précédemment propose un frein à disque dans lequel le ressort de rappel élastique comporte des moyens de rattrapage d'un jeu d'usure de la garniture de friction du patin de freinage qui se déforment plastiquement lorsque la course du patin de freinage jusqu'à sa position active est supérieure audit jeu déterminé de fonctionnement.

A cet effet, le ressort de rappel élastique comporte au moins un tronçon d'orientation axiale qui est déformable élastiquement par traction entre un état de repos et un état d'élongation maximale dont la valeur est égale au jeu déterminé de fonctionnement, le ressort comportant au moins un tronçon déformable plastiquement, sous l'effet d'un effort de traction axiale, formant lesdits moyens de rattrapage du jeu d'usure, ce tronçon déformable plastiquement étant conformé pour être allongé plastiquement lorsque la course du patin de freinage jusqu'à sa position active est supérieure au jeu déterminé de fonctionnement.

Selon le mode de réalisation proposé dans ce document, le tronçon déformable plastiquement est formé par un pliage en accordéon d'un tronçon de la lame.

Selon une autre conception décrite et représentée dans le document WO-A1-2014/029840, le ressort de rappel élastique comportant successivement :
- une portion de fixation du ressort de rappel élastique sur le frein à disque ;
- une deuxième branche rigide dont une extrémité proximale est reliée à la portion de fixation par un premier pli déformable plastiquement, autour d'un premier axe de déformation orthogonal à la direction axiale de déplacement du patin de freinage et parallèle au plan dans lequel s'étend la deuxième branche rigide ; et
une troisième branche rigide dont une extrémité proximale est reliée à une extrémité distale de la deuxième branche rigide par un deuxième pli déformable plastiquement, autour d'un deuxième axe de déformation parallèle au premier axe de déformation.

L'invention vise à améliorer la conception et les performances de tels ressorts de rappel élastique et notamment à assurer une régularité des performances du ressort en termes d'élasticité et de la valeur du rappel élastique assuré par le ressort, et une régularité de la coopération, directe ou indirecte, du ressort avec une portion associée du patin de frein .

### BREF RESUME DE L'INVENTION

Dans ce but, l'invention propose un ressort de rappel élastique axial d'un patin de freinage, d'un frein à disque, vers une position inactive,
ressort comportant des moyens, de rattrapage d'un jeu d'usure d'une garniture de friction du patin de freinage, qui se déforment plastiquement lorsqu'une course du patin de freinage selon une direction axiale de déplacement, jusqu'à une position active de freinage, est supérieure à un jeu déterminé de fonctionnement,
le ressort de rappel élastique comportant successivement :
- une portion de fixation du ressort de rappel élastique sur le frein à disque comportant une première branche rigide;
- une deuxième branche rigide dont une extrémité proximale est reliée à une extrémité distale de la première branche rigide par un premier pli déformable plastiquement, autour d'un premier axe de déformation orthogonal à la direction axiale de déplacement du patin de freinage et parallèle au plan dans lequel s'étend la deuxième branche rigide ; et
- une troisième branche rigide dont une extrémité proximale est reliée à une extrémité distale de la deuxième branche rigide par un deuxième pli déformable plastiquement, autour d'un deuxième axe de déformation parallèle au premier axe de déformation,
caractérisé :
- en ce que le ressort de rappel élastique comporte une quatrième branche rigide, dont une extrémité proximale est reliée à une extrémité distale de la troisième branche rigide par un troisième pli déformable plastiquement, autour d'un troisième axe de déformation parallèle au premier axe de déformation, et qui coopère, directement ou indirectement, avec une portion associée du patin de freinage ;
- en ce que chaque branche rigide est une bande qui s'étend globalement dans un plan parallèle au premier axe de déformation ;
et en ce que la quatrième branche rigide est espacée transversalement par rapport à la portion de fixation.

Selon d'autres caractéristiques du ressort :
- la première branche rigide s'étend parallèlement à la direction axiale de déplacement du patin de freinage ;
- chaque branche rigide est rectiligne ;
- chaque branche rigide comporte des moyens de rigidification ;
- chaque pli déformable élastiquement comporte une zone d'affaiblissement de ses propriétés mécaniques ;
- chaque pli déformable élastiquement est une portion coudée d'une bande comportant une fenêtre d'orientation parallèle au premier axe de déformation ;
- le ressort est réalisé en une seule pièce par découpe et formage d'une feuille de matériau ;
- le ressort est réalisé en une seule pièce par découpe, emboutissage et pliage d'une feuille de métal ;
- les branches rigides et les plis sont réalisés en une seule pièce par découpe emboutissage et pliage d'une bande de largeur constante ;
- la deuxième branche rigide et la troisième branche rigide sont de longueurs sensiblement égales ;
- dans un état avant toute déformation plastique des plis, la première branche rigide et la deuxième branche rigide forment un angle égal à environ 14 degrés ;
- dans un état avant toute déformation plastique des plis, la troisième branche rigide et la quatrième branche rigide forment un angle égal à environ 19 degrés ;
- dans l'état de déformation plastique maximale des plis, la troisième branche rigide et la quatrième branche rigide sont sensiblement alignées ;
- dans l'état de déformation plastique maximale des plis, la deuxième branche rigide et la troisième branche rigide forment un angle sensiblement droit ;
- dans l'état de déformation plastique maximale des plis, la première branche rigide et la deuxième branche rigide forment un angle sensiblement droit ;
- le ressort est réalisé dans un matériau choisi dans un groupe comportant notamment l'acier inoxydable, l'acier X2CrNbCu21, l'acier 304L, l'or, le plomb, un matériau synthétique, un matériau synthétique à matrice polymérique renforcé par des fibres naturelles ou synthétiques ;
- le ressort est réalisé dans un matériau dont l'allongement à la rupture est compris entre 30 et 60%, dont la résistance à la traction est comprise entre 400M Pa et 1000 MPa, et dont la limite conventionnelle élastique est comprise entre 0 et 500 MPa ;
- le ressort est réalisé dans un matériau dont l'allongement à la rupture est compris entre 40 et 60%, dont la résistance à la traction est comprise entre 400M Pa et 700 MPa, et dont la limite conventionnelle élastique est comprise entre 150 et 400 MPa ;
- le ressort est réalisé dans un matériau dont l'allongement à la rupture est compris entre 50 et 60%, dont la résistance à la traction est comprise entre 400M Pa et 600 MPa, et dont la limite conventionnelle élastique est comprise entre 200 et 300 MPa.

L'invention propose aussi un frein à disque de véhicule automobile qui comporte :
- un disque de frein qui s'étend dans un plan transversal à un axe d'orientation axiale de rotation du disque ;
- un support fixe par rapport à un châssis du véhicule ;
- au moins un patin de freinage qui comporte une garniture de friction dont une face transversale de friction coopère avec une piste de freinage associée du disque, le patin de freinage étant monté coulissant axialement dans le support fixe entre une position avant active dans laquelle la face de friction est en appui contre la piste annulaire associée du disque, et une position arrière inactive dans laquelle la face de friction est espacée axialement de la piste annulaire associée du disque, d'un jeu déterminé de fonctionnement, caractérisé en ce qu'il comporte au moins un ressort de rappel élastique du patin de freinage vers sa position inactive réalisé selon l'invention.

Selon d'autres caractéristiques du frein à disque :
- le ressort de rappel élastique est interposé entre le patin de freinage et le support fixe ;
- la portion de fixation du ressort de rappel élastique sur le frein à disque est fixée par insertion axiale dans une coulisse d'orientation axiale du support fixe ;
- la première branche rigide du ressort de rappel élastique est fixée par insertion axiale dans une encoche d'orientation axiale du support fixe ;
- le patin de freinage comporte au moins une oreille latérale de guidage en coulissement qui est reçue dans une coulisse axiale du support fixe, et la encoche de fixation est formée dans un fond de la coulisse ;
- le patin de freinage comporte au moins une oreille latérale de guidage en coulissement qui est reçue dans une coulisse axiale du support, et la encoche est formée par la coulisse ;
- le frein à disque comporte une glissière qui épouse les parois de la coulisse et qui est fixée au support fixe ;
- la première branche rigide du ressort de rappel élastique sur le frein à disque comporte une butée qui est en contact avec une face en vis-à-vis du support fixe pour bloquer le coulissement axial du ressort de rappel élastique dans le sens correspondant au déplacement axial du patin de freinage vers sa position active de freinage.

L'invention propose encore un kit de remplacement pour un frein à disque de véhicule automobile selon l'invention, caractérisé en ce qu'il comporte au moins un patin de freinage et deux ressorts de rappel élastique appariés au patin de freinage dont chacun est réalisé selon l'invention.

Le kit de remplacement peut comporter de plus deux ressorts de montage du patin de freinage dans le frein à disque.

### BREVE DESCRIPTION DES FIGURES

D'autres caractéristiques et avantages de l'invention apparaitront à la lecture de la description détaillée qui va suivre pour la compréhension de laquelle on se reportera aux dessins annexés dans lesquels :
- la figure 1 est une vue en perspective éclatée qui représente un frein à disque réalisé selon un mode de réalisation de l'invention ;
- la figure 2 est une vue de face qui représente le support fixe du frein à disque de la figure 1 muni de coulisses pour recevoir des ressorts de rappel élastique d'un patin de freinage associé dans sa position inactive ;
- la figure 3 est une vue de détail en perspective qui représente un ressort de rappel élastique du patin de freinage selon l'invention ;
- la figure 4 est une vue analogue à celle de la figure 3 selon un autre angle de perspective ;
- la figure 5A est une vue latérale du ressort de rappel illustré aux figures 3 et 4, dans un état "neuf" non déformé élastiquement ni plastiquement ;
- la figure 5B est une vue similaire à celle de la figure 5A qui représente le ressort de rattrapage du jeu après sa déformation plastique maximale et correspondant à une position du patin de freinage associé active serré contre le disque ;
- la figure 5C est une vue similaire à celle de la figure 5B qui représente le ressort de rattrapage du jeu après sa déformation plastique maximale et correspondant à une position du patin de freinage associé rappelé dans sa position inactive par le ressort de rappel élastique ;
- la figure 6A est une vue, schématique en section selon un plan horizontal passant par les oreilles latérales du patin de freinage qui représente un ressort de rappel élastique et le patin de freinage écarté du disque de friction d'une distance supérieure au jeu de fonctionnement ;
- la figure 6B est une vue similaire à celle de la figure 6A qui représente le patin de freinage écarté du disque de friction d'un jeu d'usure après avoir parcouru le jeu de fonctionnement en déformant élastiquement le ressort de rappel élastique par rapport à sa position illustrée à la figure 6A ;
- la figure 6C est une vue similaire à celle de la figure 6A qui représente le patin de freinage dans une position active serré contre le disque après déformation plastique du ressort de rattrapage du jeu par rapport à la figure 6B ;
- la figure 6D est une vue similaire à celle de la figure 6A dans laquelle, par rapport à la figure 6C, le patin de freinage a été rappelé dans sa position inactive par le ressort de rappel élastique.
- la figure 7A est une vue schématique en perspective qui illustre une variante de conception dans laquelle chaque oreille d'un patin de freinage est équipée d'un ressort "radial" ;
- la figure 7B est une vue de détail en section de la figure 7A ;
- la figure 8 est une vue analogue à celles de figures 3 et 4 qui illustre une variante de réalisation du ressort de rappel élastique selon l'invention.

### DESCRIPTION DETAILLEEE DES FIGURES

Dans la suite de la description, des éléments présentant une structure identique ou des fonctions analogues seront désignés par des mêmes références.

On adoptera à titre non limitatif et sans référence à la gravité terrestre, des orientations axiales, verticales et transversales en référence au trièdre "A,V,T" des figures.

L'orientation axiale "A" est dirigée d'arrière en avant, parallèlement à un axe "B" de rotation du disque 12.

On définit le plan horizontal comme étant un plan axial transversal.

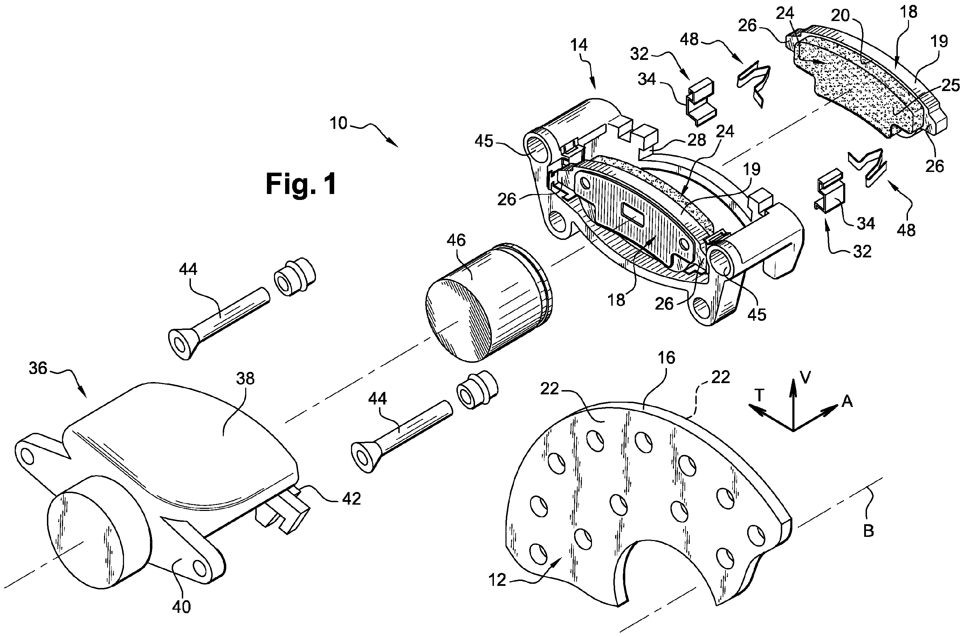

On a représenté schématiquement à la figure 1 un frein à disque 10 de véhicule automobile. Il s'agit ici d'un frein à disque 10 dit à "étrier flottant" ou "étrier coulissant".

De manière connue, le frein à disque comporte un disque 12 qui est monté tournant autour d'un axe "B" de rotation d'orientation axiale. Le disque 12 est solidaire en rotation avec une roue (non représentée) du véhicule automobile.

Le frein à disque 10 comporte un support 14, aussi appelé chape, qui est monté fixe par rapport au châssis (non représenté) du véhicule. Le support fixe 14 chevauche un bord périphérique 16 du disque 12.

Deux patins de freinage opposés 18, arrière et avant (aussi appelés intérieur et extérieur) sont montés coulissant axialement dans le support fixe 14 de part et d'autre du disque 12.

Les deux patins de freinage 18, arrière et avant, présentent une structure et un agencement sur le support fixe 14 qui sont identiques par symétrie par rapport à un plan transversal vertical médian.

Par la suite, on ne décrira que le patin de freinage 18 arrière, la description étant applicable au patin de freinage 18 avant en inversant les directions avant et arrière.

Le patin de freinage arrière 18 se présente sous la forme d'une plaque transversale verticale 19 support de garniture de friction. Le patin de freinage 18 présente une face avant 20, qui est orientée vers une face arrière 22 en vis à vis du disque 12 qui est en forme d'une piste annulaire. La face avant 20 porte une garniture de friction 24 dont une face transversale et verticale avant de friction 25 est apte à coopérer avec la face 22 du disque 12.

Chacune des extrémités transversales opposées du patin de freinage 18 comporte une oreille latérale 26 qui est montée coulissante, avec jeu, dans une coulisse 28 associée d'un bras associé de la chape ou support fixe 14.

Chaque coulisse 28 est d'orientation axiale et présente, en section par un plan vertical et transversal orthogonal aux axes A et B, une forme de "C" ouvert transversalement vers l'oreille latérale associée 26 du patin de freinage 18. La coulisse 28 est délimitée transversalement par un fond 30 d'orientation axiale et globalement verticale.

Dans l'exemple représenté aux figures, une glissière 32 est interposée transversalement entre chaque oreille latérale 26 et la coulisse 28 associée.

Chaque glissière 32 est formée par un ressort à lame de section en "C" qui épouse les parois de la coulisse 28 associée. La glissière 32 comporte ainsi un fond 34 d'orientation verticale et axiale qui est agencé en regard du fond 30 de la coulisse 28.

La glissière 32 permet un degré déterminé de mouvement du patin de freinage 18 dans le support fixe 14, c'est-à-dire, généralement mais de manière non limitative, un mouvement de coulissement axial, et un mouvement de coulissement transversal accompagnant la rotation du disque 12, lors d'une action de freinage.

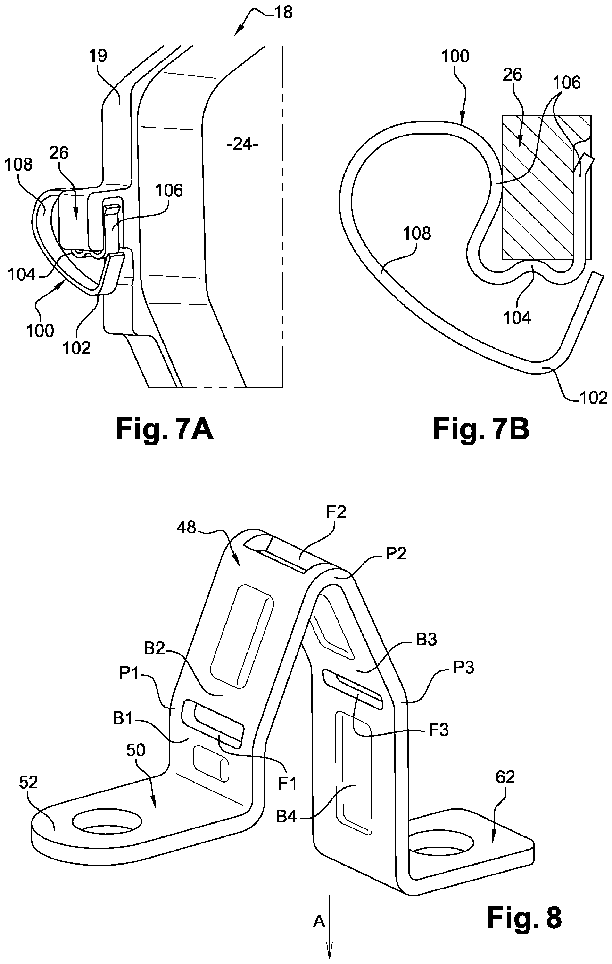

Sans sortir du cadre de la présente invention, et selon une conception non représentée, chaque oreille latérale 26 peut être équipée d'un ressort dit de montage, du type de celui décrit et représenté dans le document FR-A1-2.925.636 et illustré aux figures 7A et 7B.

Le patin de freinage 18 est ainsi monté coulissant selon une direction axiale, parallèle à l'axe de rotation B du disque 12, dans le support fixe 14 sur une course de fonctionnement entre :
- une position avant active dans laquelle la face transversale avant de friction 25 de la garniture de friction 24 est en appui contre la face 22 en vis à vis du disque 12 ; et
- une position arrière inactive dans laquelle la face transversale avant de friction 25 de la garniture de friction 24 du patin de freinage 18 est écartée axialement par rapport à la face associée 22 du disque 12, d'un jeu déterminé de fonctionnement "J1".

Lors d'une opération de freinage, le serrage des patins de freinage 18, depuis leur position inactive jusqu'à leur position active, est commandé par un étrier de frein 36 du frein à disque 10.

De manière connue, l'étrier 36 comporte une voûte 38 qui s'étend axialement au-dessus du support fixe 14 en le recouvrant et deux ailes arrière 40 et avant 42 qui s'étendent radialement depuis des bords d'extrémité arrière et avant de la voûte 38 vers l'axe "B".

L'aile avant 42 s'étend en regard du patin de freinage 18 avant, et l'aile arrière 40 s'étend en regard du patin de freinage 18 arrière.

L'étrier 36 est ici monté coulissant axialement par rapport au support fixe 14 par l'intermédiaire de deux colonnettes parallèles 44 de guidage dont chacune est reçue en coulissement dans un alésage axial associé 45 du support fixe 14.

De manière connue, l'aile arrière 40 de l'étrier 36 porte au moins un piston 46 axial dont une face transversale avant d'appui est susceptible, lors d'une opération de freinage, de coopérer avec la face transversale en vis à vis du patin de freinage arrière 18 pour le solliciter axialement vers l'avant, pour exercer un effort axial de serrage de la face transversale avant de friction 25 de la garniture de friction 24 en appui contre la face 22 en vis à vis du disque 12.

Par réaction, l'étrier 36 coulisse axialement vers l'arrière et, de manière symétrique, l'aile avant 42 sollicite le patin de freinage 18 avant pour serrer la face transversale arrière de friction 25 de la garniture de friction 24 du patin de freinage 18 avant en appui contre la face 22 avant en vis à vis du disque 12.

Lorsque, à l'issue de l'opération de freinage, le piston 46 cesse de solliciter le patin de freinage 18 arrière, le retour des patins de freinage 18, depuis leur position active vers leur position inactive, est généralement provoqué par la rotation du disque 12 qui "repousse" chaque patin de freinage 18 vers sa position inactive.

Néanmoins, dans certains cas, on a constaté que la force de répulsion exercée par le disque 12 n'est pas suffisante pour repousser chacun des patins de freinage 18 jusqu'à sa position inactive respective. La garniture de friction 24 des patins de freinage 18 continue ainsi à frotter contre le disque 12, alors qu'aucune action de serrage des garnitures de friction des patins de freinage par l'étrier 36 n'est commandée.

A l'issue d'une opération de freinage, pour garantir que chaque patin de freinage 18 revient dans une position inactive, le frein à disque 10 est équipé de moyens de rappel élastique du patin de freinage 18 vers sa position inactive. Ces moyens de rappel élastique sont réalisés sous la forme de ressorts de rappel élastique qui sont interposés entre le patin de freinage 18 et le support fixe 14.

Le frein à disque 10 comporte ici quatre ressorts de rappel élastique 48, aussi appelés ressorts "écarteurs", dont chacun - à titre non limitatif - est ici agencé entre le support fixe 14 et une oreille latérale associée 26 d'un patin de freinage 18.

Ainsi, un patin de freinage 18, arrière ou avant, est ici associé à deux ressorts de rappel élastique 48 dont chacun coopère, directement ou indirectement, avec la plaque 19 porte garniture de friction.

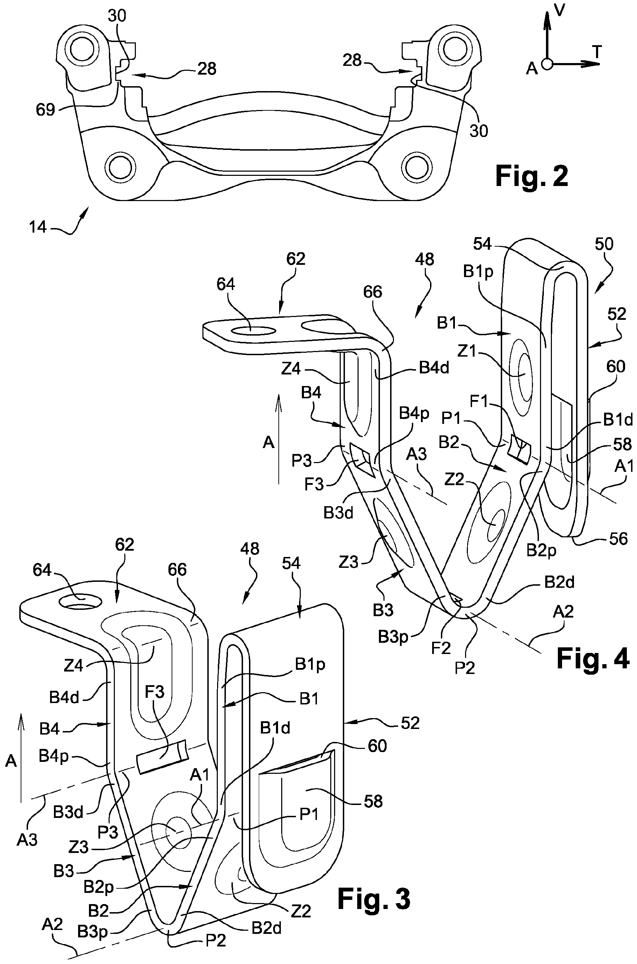

On décrira maintenant un mode de réalisation d'un ressort de rappel élastique 48 selon l'invention tel qu'il est notamment représenté aux figures 3 et 4.

A titre non limitatif, les quatre ressorts 48 de rappel élastique sont tous identiques et ils sont agencés de la même manière sur le support fixe 14. Un seul de ces ressorts 48 de rappel élastique du patin de freinage arrière 18 sera donc décrit par la suite en détails.

Le ressort de rappel élastique 48 se présente sous la forme d'une bande métallique, par exemple en acier, de section rectangulaire dont la largeur s'étend verticalement et qui réalisée par exemple par découpe, emboutissage et pliage d'une tôle d'acier inoxydable d'épaisseur constante.

En se reportant notamment aux figures 3 et 4, le ressort de rappel élastique 48 comporte une première portion 50, dite de fixation, en forme générale d'épingle à cheveux formant les moyens de fixation du ressort 48 sur le support fixe 14.

La portion 50 comporte une lame 52 qui s'étend axialement depuis un coude 54 jusqu'à une extrémité libre.

La portion 50 comporte une deuxième lame ou bande, reliée à la lame 52 par le coude 54 formant charnière élastique, qui s'étend globalement axialement parallèlement à la lame 52, et qui, au sens de l'invention constitue une première branche rigide B1 qui s'étend dans un plan axial et vertical.

La première branche B1 est rigidifiée par des moyens de rigidification constitués par une zone emboutie Z1.

La lame 52 comporte une surface de butée 60 d'orientation verticale et transversale qui est destinée à être en contact axial avec une face 69 en vis à vis du support fixe 14 pour bloquer axialement de la lame 52, et donc le ressort 48, en direction du disque 12.

Plus particulièrement, la face de butée 60 est ici formée par la face avant d'un bossage 58 réalisé, dans le corps de la lame 52, par exemple par emboutissage.

Le bossage 58 fait saillie transversalement dans la face de la lame 52 qui est opposée à la première branche rigide B1. Le bossage 58 présente une forme allongée axialement.

La partie de fixation 50 est insérée axialement vers l'avant, par son coude 54 formant charnière, dans une coulisse associée 28 du support fixe 14.

La conception de partie de fixation 50 et de la coulisse 28 sont telles que la partie de fixation 50 est montée encastrée, ou de manière équivalente, pour garantir sa stabilité par rapport au support fixe 14 en s'opposant notamment à des phénomènes de basculement en rotation autour des axes A, V et T.

A cet effet, le fond vertical 30 de la coulisse 28 peut être conformé en une rainure ou encoche axiale dimensionnée pour recevoir, pratiquement sans jeu, la lame 52.

La forme et les dimensions de l'encoche 30 permettent aussi de centrer verticalement le ressort de rappel 48 par rapport à la coulisse 28.

A partir de la portion de fixation 50, et plus précisément à partir de la première branche rigide rectiligne d'orientation axiale B1, le ressort de rappel élastique 48 se prolonge successivement par trois autres branches rigides rectilignes B2, B3 et B4 respectivement.

Chaque branche rigide rectiligne Bi comporte une extrémité proximale Bip par rapport à la portion de fixation 50, et une extrémité distale Bid.

Ainsi, la première branche B1 a son extrémité proximale B1p reliée au coude 54, tandis que son extrémité distale B1d est située axialement hors de la coulisse 28 pour être reliée à la deuxième branche rigide B2.

L'extrémité proximale B2p de la deuxième branche rigide B2 est reliée à l'extrémité distale B1d de la première branche rigide B1 par un premier pli P1 déformable plastiquement au tour d'un premier axe de déformation A1.

Comme la première branche B1, la deuxième branche rigide B2 est conformée en une bande dans le prolongement de la première branche rigide B1.

Le premier axe de déformation A1 est orthogonal à la direction axiale A de déplacement du patin de freinage et il est parallèle aux plans dans lesquels s'étendent la première branche rigide B1 et la deuxième branche rigide B2.

De façon à ce que le premier pli P1 en forme de coude constitue une zone déformable plastiquement, cette portion est affaiblie mécaniquement, ici au moyen d'une fenêtre ou lumière F1 qui est ici une découpe débouchante de forme rectangulaire et d'orientation axiale selon l'axe A1.

L'invention n'est pas limitée à ce mode de réalisation de la zone déformable plastiquement constituant le pli P1, tout autre moyen de modification des caractéristiques mécaniques du matériau constitutif dans cette zone pour la rendre déformable plastiquement au sens de l'invention pouvant être utilisé, tel que par exemple une réduction de l'épaisseur du matériau dans cette zone.

De la même manière, l'extrémité proximale B3p de la troisième branche rigide B3 est reliée à l'extrémité distale B2d de la deuxième branche rigide B2 par un deuxième pli déformable plastiquement P2 qui est déformable autour d'un deuxième axe de déformation A2, parallèle au premier axe de déformation A1.

Le deuxième pli P2 est une portion coudée de la bande de matériau comportant une fenêtre F2.

Enfin, l'extrémité proximale B4p de la quatrième branche B4 est reliée à l'extrémité distale B3d de la troisième branche rigide B3 par un troisième pli déformable plastiquement P3 permettant une déformation autour d'un troisième axe de déformation A3, parallèle au premier axe de déformation A1.

Le troisième pli P3 comporte une fenêtre F3 analogue aux fenêtres F1 et F2.

La quatrième branche rigide B4 est rectiligne et d'orientation générale axiale parallèle à la première branche rigide B1, et à titre non limitatif, elle se prolonge ici par une patte active 62 destinée à être reliée directement ou indirectement au patin de freinage 18 associé.

La patte active 62 est ici réalisée par prolongement de la bande constitutive des branches Bi et elle s'étend depuis l'extrémité distale B4d de la quatrième branche rigide B4 dans un plan transversal orthogonal au plan de la quatrième branche rigide B4.

A titre d'exemple, le tronçon d'extrémité libre de la patte active 62 comporte un trou axial débouchant 64 susceptible de permettre sa fixation sur une partie associée du patin de freinage 18, et par exemple de sa plaque 19 porte-garniture de friction.

A titre non limitatif, chacune des branches Bi est ici rigidifiée par une zone emboutie Zi formée dans le corps constitutif de la chaque branche Bi.

Comme on peut le voir aux figures 3 et 4, la zone emboutie Z4 de rigidification de la quatrième branche rigide B4 se prolonge dans le corps de la patte active 62 de manière que le coude à angle droit 66 qui les relie soit lui-même rigide de façon à garantir, en utilisation, la conformation à angle droit entre la première branche rigide B4 et la patte active 62.

Aux figures 3, 4 et 5A, le ressort de rappel élastique 48 est représenté dans un état initial "neuf", c'est-à-dire avant toute déformation plastique des plis Pi.

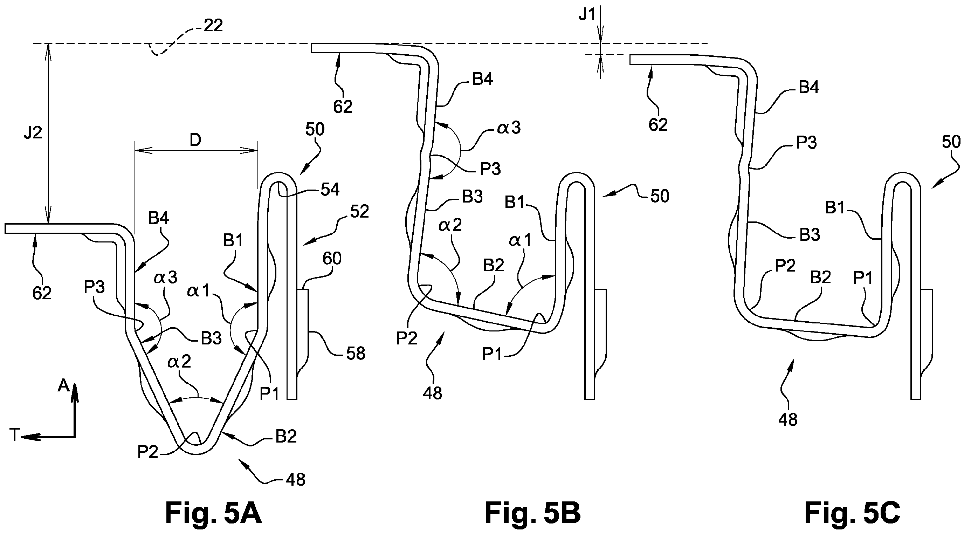

Dans cet état, neuf ou initial, la première branche B1 et la quatrième branche rigide B4 sont sensiblement parallèles entre elles et d'orientation axiale en étant agencées à distance transversale l'une de l'autre, c'est-à-dire espacées d'une distance D indiquée à la figure 5A.

A titre d'exemple non limitatif, et comme illustré aux figures, les deuxième et troisième branches rigides B2 et B3 sont de longueur égale et elles forment entre elles un angle aigu a2, ici égal à environ cinquante-huit degrés.

De la même manière, la deuxième branche rigide B2 forme avec la première branche rigide B1 un angle obtus a1 qui est ici sensiblement égal à l'angle obtus a3 que forment entre elles la troisième branche rigide B3 et la quatrième branche rigide B4, ici égaux à environ cent-cinquante et un degrés.

Par comparaison, et comme on peut le voir plus particulièrement aux figures 5A à 5C, dans l'état de déformation plastique maximale du ressort de rappel élastique 48, les première et quatrième branches rigide B1 et B4 sont toujours sensiblement parallèles, d'orientation axiale et espacées l'une de l'autre sensiblement de la distance D, tandis que les trois plis Pi ont été déformés plastiquement, respectivement autour des axes de déformation Ai.

Le premier angle a1 s'est refermé de telle manière que la première banche B1 et la deuxième branche rigide B2 forment entre elles un angle dont la valeur a1 est proche d'un angle droit, ici égal à environ quatre-vingt degrés.

L'angle a2 entre la première branche rigide B2 et la deuxième branche rigide B3 s'est ouvert de telle manière qu'elles forment entre elles un angle dont la valeur est proche d'un angle droit, ici égal à environ cent degrés.

Enfin, le troisième angle a3 s'est ouvert de telle manière que la troisième branche B3 et la quatrième branche rigide B4 s'étendent axialement sensiblement dans le prolongement l'une de l'autre avec un angle a3 dont la valeur est ici proche d'un angle plat à 180 degrés.

A titre d'exemple, l'épaisseur de la bande de matériau est comprise entre 0,5 et 0,8 millimètre et le matériau est un acier inoxydable de référence X2CrNbCu21 ou de référence 304L (X2CrNi18-9 / X2CrNi19-11).

A titre d'exemple, le déplacement maximal correspondant à l'usure maximale J2 est égal à environ 14 millimètres.

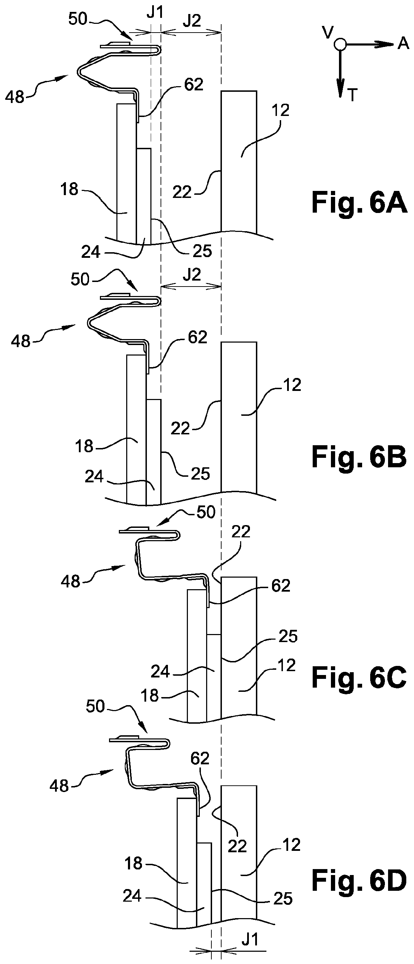

On décrira à présent le fonctionnement du ressort extérieur de rappel élastique 48E réalisé selon l'invention en références aux figures 6A à 6D.

On a représenté à la figure 6A le patin de freinage 18 dans une position inactive avec une usure prononcée de la garniture de friction 24. Le patin de freinage 18 est ainsi agencé axialement en arrière du disque 12 et la face transversale avant de friction 25 de la garniture de friction 24 est à une distance égale à la somme :
- du jeu "J1" déterminé de fonctionnement ; et
- d'un jeu "J2" d'usure.

Sur les figures, pour les besoins de la description, les jeux "J1, J2" ont été exagérés.

Le ressort de rappel élastique 48, et ses parties déformables élastiquement, est alors dans son état de repos.

Lorsque le patin de freinage 18 est sollicité vers sa position active par le piston 46, il parcourt tout d'abord le trajet correspondant au le jeu "J1" déterminé de fonctionnement, comme représenté à la figure 6B.

Lors de cette première partie de la course, le patin de freinage 18 entraîne la patte active 62 du ressort de rappel élastique 48 et la branche B4 de manière à tendre élastiquement le ressort de rappel élastique 48 entre la portion de fixation 50 fixée au support fixe 14, et la patte active 62 fixée au patin de freinage 18.

Les parties déformables élastiquement du ressort de rappel élastique 48 atteignent alors leur état d'élongation maximale.

Les plis Pi se déforment, d'abord élastiquement, puis plastiquement.

La face transversale avant de la garniture de friction 24 du patin de freinage 18 est encore écartée, par rapport à la face ou piste annulaire associée du disque 12, d'une distance égale au jeu "J2" d'usure. Le patin de freinage 18 poursuit donc sa course axiale jusqu'à sa position active représentée à la figure 6C.

Lors de cette deuxième partie de course, les parties déformables élastiquement ne pouvant plus se déformer "élastiquement", l'effort de serrage est transmis aux plis Pi déformables plastiquement du ressort de rappel élastique 48.

Les plis Pi déformables plastiquement subissent ainsi un effort qui tend à provoquer des déformations angulaires plastiques des plis Pi autour des axes de déformation associés Ai.

Les plis Pi sont alors déformés plastiquement, les déformations élastiques des parties déformables plastiquement étant négligeables par rapport à leur déformation plastique.

Lorsque l'opération de freinage prend fin, le patin de freinage 18 est rappelé vers sa position inactive par les parties déformables élastiquement qui reprennent leur état de repos, comme illustré à la figure 6D.

Le patin de freinage 18 est ainsi à nouveau écarté du disque 12 d'une distance égale au seul jeu "J1" déterminé de fonctionnement ; le jeu "J2" d'usure ayant été absorbé par la déformation plastique des plis Pi déformables plastiquement.

Le ressort de rappel élastique 48 permet ainsi de garantir que le patin de freinage 18 est rappelé dans sa position inactive.

De plus, l'agencement de plis Pi déformables plastiquement permet d'éviter que l'effort de serrage à exercer par le piston 46 pour actionner le patin de freinage 18 vers sa position active ne devienne trop élevé.

En outre, en conservant un jeu "J1" de fonctionnement constant entre le patin de freinage 18 en position inactive et le disque 12, le temps de réponse du système de freinage demeure constant indépendamment de l'usure de la garniture de friction 24.

Pour le choix du matériau dans lequel est réalisé un ressort 48 de rappel élastique, de préférence mais à titre non limitatif, l'allongement à la rupture « A », la résistance à la traction ou tension de rupture Rm, et la limite conventionnelle élastique Rp0,2 sont choisis dans les plages suivantes de valeurs :
- 30 < A% < 60% ; de préférence 40 < A% < 60% ; et de préférence encore 50 < A% < 60 %,
- 400 < Rm < 1000 MPa ; de préférence 400 < Rm < 700 MPa ; et de préférence encore 400 < Rm < 600 MPa,
- 0 < Rp0.2 < 500 MPa ; de préférence 150 < Rp0.2 < 400 MPa ; et de préférence encore 200 < Rp0.2 < 300 MPa,
   avec 1 MPa = 10⁶ Pa.

On a représenté schématiquement à la figure 7, un ressort 100 de montage du patin de freinage 18 susceptible d'équiper les oreilles 26 d'un patin de freinage 18 pour le montage et le guidage du patin de freinage 18 dans les coulisses axiales associées 28 du support fixe 14, avec ou non la présence de glissières 34.

De manière connue, chaque ressort 100 de patin comporte une branche inférieure 102 de glissement qui coopère avec une face horizontale inférieure de la coulisse associée et qui sollicite une facette horizontale supérieure de l'oreille 26 en appui verticalement vers le haut contre une face supérieure en vis-à-vis de la coulisse 28.

Selon la conformation illustrée à la figure 7, le ressort 100 de patin est communément appelé "ressort escargot" et il comporte une branche 104 prenant appui sous une facette inférieure horizontale de l'oreille 26 du patin de freinage 18, cette branche 104 faisant partie d'une branche de fixation, ou agrafe, 106 qui pince élastiquement l'oreille 26 pour assurer la fixation du ressort 100 de patin sur l'oreille 26.

Le ressort 100 de patin comporte encore une branche incurvée 108 qui relie la branche de fixation 106 à la branche inférieure 102 de glissement en assurant principalement l'élasticité du ressort de patin 100.

A usure complète maximale de la garniture de friction, le ressort de rappel élastique 48 est déformé plastiquement et, comme le patin de freinage usé 18, il doit être remplacé.

Ainsi, un ensemble ou kit de remplacement d'un jeu usagé de patins de freinage 18 comporte, pour chaque patin de freinage, un patin de freinage 18 neuf proprement dit et au moins un jeu de deux ressorts de rappel élastique 48 constituant une paire de ressorts de rappel élastique appariés au patin de freinage associé.

Si le patin de freinage est du type équipé de ressorts de montage de patin 100, le kit de remplacement comporte, pour chaque patin de freinage, un patin neuf équipé de ses deux ressorts de patin 100, un pour chacune de ses deux oreilles radiales 26.

En fonction notamment de la conception de la partie de fixation 50, les deux ressorts équipant un patin de freinage peuvent être identiques et interchangeables, ou constituer une paire de deux ressorts associés et appariés à un patin de freinage avant et/ou arrière.

La conception selon l'invention d'un ressort de rappel élastique n'est pas limitée au mode principal de réalisation qui vient d'être décrit.

Elle peut notamment varier de manière importante en ce qui concerne la conception de la partie de liaison, ou de raccordement de l'extrémité distale B4d de la quatrième branche rigide B4 avec le patin de freinage pour agir, directement ou indirectement, sur celui-ci.

Elle peut aussi varier de par la conception de la partie de fixation 50.

A titre d'exemple, on a représenté schématiquement à la figure 8 une variante de réalisation dans laquelle la partie de fixation 50 est constituée par une patte 52 analogue à la patte 62 qui est reliée à l'extrémité proximale B1p de la première branche rigide B1 et qui s'étend dans un plan orthogonal pour être fixée, par exemple par rivetage, sur une partie associée du support fixe 14.

## Revendications

1. Ressort (48) de rappel élastique axial d'un patin de freinage (18), d'un frein à disque (12), vers une position inactive, ressort (48) comportant des moyens, de rattrapage d'un jeu d'usure (J2) d'une garniture de friction (24) du patin de freinage (18), qui se déforment plastiquement lorsqu'une course du patin de freinage selon une direction axiale de déplacement, jusqu'à une position active de freinage, est supérieure à un jeu déterminé de fonctionnement (J1),
le ressort de rappel élastique (48) comportant successivement :
- une portion de fixation (50) du ressort de rappel élastique (48) sur le frein à disque (14) comportant une première branche rigide (B1) ;
- une deuxième branche rigide (B2) dont une extrémité proximale (B2p) est reliée à une extrémité distale (B1d) de la première branche rigide (B1) par un premier pli déformable plastiquement (P1), autour d'un premier axe de déformation (A1) orthogonal à la direction axiale (A) de déplacement du patin de freinage (18) et parallèle au plan dans lequel s'étend la deuxième branche rigide (B2) ; et
- une troisième branche rigide (B3) dont une extrémité proximale (B3p) est reliée à une extrémité distale (B2d) de la deuxième branche rigide (B2) par un deuxième pli déformable plastiquement (P2), autour d'un deuxième axe de déformation (A2) parallèle au premier axe de déformation (A1),
**caractérisé :**
- **en ce que** le ressort de rappel élastique (48) comporte une quatrième branche rigide (B4), dont une extrémité proximale (B4p) est reliée à une extrémité distale (B3d) de la troisième branche rigide (B3) par un troisième pli déformable plastiquement (P3), autour d'un troisième axe de déformation (A3) parallèle au premier axe de déformation (A1), et qui coopère, directement ou indirectement, avec une portion associée du patin de freinage (18) ;
- **en ce que** chaque branche rigide (B1, B2, B3, B4) est une bande qui s'étend globalement dans un plan parallèle au premier axe de déformation (A1) ;
- et **en ce que** la quatrième branche rigide (B4) est espacée transversalement (D) par rapport à la portion de fixation (50).

2. Ressort selon la revendication 1
**caractérisé en ce que** la première branche rigide (B1) s'étend parallèlement à la direction axiale (A) de déplacement du patin de freinage.

3. Ressort selon l'une quelconque des revendications précédentes, **caractérisé en ce que** chaque branche rigide (B1, B2, B3, B4) est rectiligne.

4. Ressort selon l'une quelconque des revendications précédentes, **caractérisé en ce que** chaque branche rigide (B1, B2, B3, B4) comporte des moyens de rigidification (Z1, Z2, Z3, Z4).

5. Ressort selon l'une quelconque des revendications précédentes, **caractérisé en ce que** chaque pli déformable plastiquement (P1, P2, P3) comporte une zone (F1, F2, F3) d'affaiblissement de ses propriétés mécaniques).

6. Ressort selon l'une la revendication 5, **caractérisé en ce que** chaque pli déformable plastiquement (P1, P2, P3) est une portion coudée d'une bande comportant une fenêtre (F1, F2, F3) d'orientation parallèle au premier axe de déformation (A1).

7. Ressort selon l'une quelconque des revendications précédentes, **caractérisé en ce qu'**il est réalisé en une seule pièce par découpe et formage d'une feuille de matériau.

8. Ressort selon la revendication 7, **caractérisé en ce qu'**il est réalisé en une seule pièce par découpe, emboutissage et pliage d'une feuille de métal.

9. Ressort selon l'une quelconque des revendications précédentes, **caractérisé en ce que** les branches rigides (B1, B2, B3, B4) et les plis (P1, P2, P3) sont réalisés en une seule pièce par découpe emboutissage et pliage d'une bande de largeur constante.

10. Ressort selon l'une quelconque des revendications précédentes, **caractérisé en ce que** la deuxième branche rigide (B2) et la troisième branche rigide (B3) sont de longueurs sensiblement égales.

11. Ressort selon la revendication 1, **caractérisé en ce que**, dans un état avant toute déformation plastique des plis (P1, P2, P3), la première branche rigide (B1) et la deuxième branche rigide (B2) forment un angle (α1) égal à environ 14 degrés.

12. Ressort selon la revendication 11, **caractérisé en ce que**, dans un état avant toute déformation plastique des plis, la troisième branche rigide (B3) et la quatrième branche rigide (B4) forment un angle (α3) égal à environ 19 degrés.

13. Ressort selon l'une quelconque des revendications précédentes, **caractérisé en ce que**, dans l'état de déformation plastique maximale des plis (P1, P2, P3), la troisième branche rigide (B3) et la quatrième branche rigide (B4) sont sensiblement alignées.

14. Ressort selon l'une quelconque des revendications précédentes, **caractérisé en ce que**, dans l'état de déformation plastique maximale des plis (P1, P2, P3), la deuxième branche rigide (B2) et la troisième branche rigide (B3) forment un angle (α2) sensiblement droit.

15. Ressort selon la revendication 11, **caractérisé en ce que**, dans l'état de déformation plastique maximale des plis (P1, P2, P3), la première branche rigide (B1) et la deuxième branche rigide (B2) forment un angle (α1) sensiblement droit.

16. Ressort selon l'une quelconque des revendications précédentes, **caractérisé en ce qu'**il est réalisé dans un matériau choisi dans un groupe comportant notamment l'acier inoxydable, l'acier X2CrNbCu21, l'acier 304L, l'or, le plomb, un matériau synthétique, un matériau synthétique à matrice polymérique renforcé par des fibres naturelles ou synthétiques.

17. Ressort selon l'une quelconque des revendications précédentes, **caractérisé en ce qu'**il est réalisé dans un matériau dont l'allongement à la rupture (A%) est compris entre 30 et 60%, dont la résistance à la traction (Rm) est comprise entre 400M Pa et 1000 MPa, et dont la limite conventionnelle élastique (Rp0,2) est comprise entre 0 et 500 MPa.

18. Ressort selon la revendication précédente, **caractérisé en ce qu'**il est réalisé dans un matériau dont l'allongement à la rupture (A%) est compris entre 40 et 60%, dont la résistance à la traction (Rm) est comprise entre 400M Pa et 700 MPa, et dont la limite conventionnelle élastique (Rp0,2) est comprise entre 150 et 400 MPa.

19. Ressort selon la revendication précédente, **caractérisé en ce qu'**il est réalisé dans un matériau dont l'allongement à la rupture (A%) est compris entre 50 et 60%, dont la résistance à la traction (Rm) est comprise entre 400M Pa et 600 MPa, et dont la limite conventionnelle élastique (Rp0,2) est comprise entre 200 et 300 MPa.

20. Frein à disque (10) de véhicule automobile qui comporte :
- un disque (12) de frein qui s'étend dans un plan transversal à un axe (A) d'orientation axiale de rotation du disque ;
- un support (14) fixe par rapport à un châssis du véhicule ;
- au moins un patin de freinage (18) qui comporte une garniture (24) de friction dont une face transversale de friction (25) coopère avec une piste de freinage (22) associée du disque (12), le patin de freinage (18) étant monté coulissant axialement dans le support fixe (14) entre une position avant active dans laquelle ladite face (25) de friction est en appui contre la piste annulaire associée (22) du disque (12), et une position arrière inactive dans laquelle ladite face (25) de friction est espacée axialement de ladite piste annulaire associée du disque, d'un jeu (J1) déterminé de fonctionnement,
**caractérisé en ce qu'**il comporte au moins un ressort (48) de rappel élastique du patin de freinage (18) vers sa position inactive réalisé selon l'une quelconque des revendications 1 à 16.

21. Frein à disque selon la revendication 20, **caractérisé en ce que** le ressort (48) de rappel élastique est interposé entre le patin de freinage (18) et le support fixe (14).

22. Frein à disque (10) selon la revendication 20, **caractérisé en ce que** la portion (50) de fixation du ressort de rappel élastique (48) sur le frein à disque est fixée par insertion axiale dans une coulisse (28) d'orientation axiale du support fixe (14).

23. Frein à disque (10) selon la revendication 20, prise en compte avec la revendication 2, **caractérisé en ce que** la première branche rigide (B1) du ressort de rappel élastique (48) est fixée par insertion axiale dans une encoche (30) d'orientation axiale du support fixe (14).

24. Frein à disque (10) selon la revendication 23, **caractérisé en ce que** ledit au moins un patin de freinage (18) comporte au moins une oreille (26) latérale de guidage en coulissement qui est reçue dans une coulisse (28) axiale du support fixe (14), et **en ce que** ladite encoche (30) de fixation est formée dans un fond de la coulisse (28).

25. Frein à disque (10) selon la revendication 23, **caractérisé en ce que** le patin de freinage (18) comporte au moins une oreille (26) latérale de guidage en coulissement qui est reçue dans une coulisse (28) axiale du support, et **en ce que** ladite encoche (30) est formée par la coulisse (28).

26. Frein à disque (10) selon la revendication 20, **caractérisé en ce qu'**il comporte une glissière (32) qui épouse les parois de la coulisse (28) et qui est fixée au support fixe (14).

27. Frein à disque (10) selon l'une quelconque des revendications 22 à 25, **caractérisé en ce que** la première branche rigide (B1) du ressort de rappel élastique (48) sur le frein à disque (12) comporte une butée (60) qui est en contact avec une face en vis-à-vis du support fixe (14) pour bloquer le coulissement axial du ressort de rappel élastique (48) dans le sens correspondant au déplacement axial du patin de freinage (18) vers sa position active de freinage.

28. Kit de remplacement pour un frein à disque de véhicule automobile selon l'une quelconque des revendications 20 à 27, **caractérisé en ce qu'**il comporte au moins un patin de freinage (18) et deux ressorts (48) de rappel élastique appariés audit patin de freinage (18) dont chacun est réalisé selon l'une quelconque des revendications 1 à 17.

29. Kit de remplacement selon la revendication 28, **caractérisé en ce qu'**il comporte de plus deux ressorts (100) de montage du patin de freinage dans le frein à disque.

## Patentansprüche

1. Feder (48) zur elastischen axialen Rückholung eines Bremsbelags (18) einer Scheibenbremse (12) in Richtung einer inaktiven Position, wobei die Feder (48) Mittel zum Ausgleichen eines Verschleißspiels (J2) einer Reibgarnitur (24) des Bremsbelags (18) umfasst, die sich plastisch verformen, wenn ein Weg des Bremsbelags entlang einer axialen Verlagerungsrichtung bis zu einer aktiven Bremsposition größer ist als ein bestimmtes Funktionsspiel (J1), wobei die elastische Rückholfeder (48) sukzessive Folgendes umfasst:
- einen Bereich (50) zur Befestigung der elastischen Rückholfeder (48) an der Scheibenbremse (14), umfassend einen ersten starren Arm (B1);
- einen zweiten starren Arm (B2), von dem ein proximales Ende (B2p) mit einem distalen Ende (B1d) des ersten starren Arms (B1) durch einen ersten Falz (P1) verbunden ist, der plastisch um eine erste Verformungsachse (A1) orthogonal zur axialen Verlagerungsrichtung (A) des Bremsbelags (18) und parallel zur Ebene verformbar ist, in der sich der zweite starre Arm (B2) erstreckt; und
- einen dritten starren Arm (B3), von dem ein proximales Ende (B3p) mit einem distalen Ende (B2d) des zweiten starren Arms (B2) durch einen zweiten Falz (P2) verbunden ist, der plastisch um eine zweite Verformungsachse (A2) parallel zur ersten Verformungsachse (A1) verformbar ist,
**dadurch gekennzeichnet, dass**:
- die elastische Rückholfeder (48) einen vierten starren Arm (B4) umfasst, von dem ein proximales Ende (B4p) mit einem distalen Ende (B3d) des dritten starren Arms (B3) durch einen dritten Falz (P3) verbunden ist, der plastisch um eine dritte Verformungsachse (A3) parallel zur ersten Verformungsachse (A1) verformbar ist, und der direkt oder indirekt mit einem zugeordneten Bereich des Bremsbelags (18) zusammenwirkt;
- jeder starre Arm (B1, B2, B3, B4) ein Band ist, das sich im Allgemeinen in einer Ebene parallel zur ersten Verformungsachse (A1) erstreckt;
- und dass der vierte starre Arm (B4) transversal (D) mit Bezug zu dem Befestigungsbereich (50) beabstandet ist.

2. Feder nach Anspruch 1, **dadurch gekennzeichnet, dass** der erste starre Arm (B1) sich parallel zur axialen Verlagerungsrichtung (A) des Bremsbelags erstreckt.

3. Feder nach einem der vorhergehenden Ansprüche, **dadurch gekennzeichnet, dass** jeder starre Arm (B1, B2, B3, B4) geradlinig ist.

4. Feder nach einem der vorhergehenden Ansprüche, **dadurch gekennzeichnet, dass** jeder starre Arm (B1, B2, B3, B4) Versteifungsmittel (Z1, Z2, Z3, Z4) umfasst.

5. Feder nach einem der vorhergehenden Ansprüche, **dadurch gekennzeichnet, dass** jeder plastisch verformbare Falz (P1, P2, P3) eine Zone (F1, F2, F3) zur Schwächung seiner mechanischen Eigenschaften umfasst.

6. Feder nach Anspruch 5, **dadurch gekennzeichnet, dass** jeder plastisch verformbare Falz (P1, P2, P3) ein gebogener Bereich eines Bands ist, umfassend ein Orientierungsfenster (F1, F2, F3) parallel zur ersten Verformungsachse (A1).

7. Feder nach einem der vorhergehenden Ansprüche, **dadurch gekennzeichnet, dass** sie einstückig durch Schneiden und Formen einer Materialfolie hergestellt ist.

8. Feder nach Anspruch 7, **dadurch gekennzeichnet, dass** sie einstückig durch Schneiden, Tiefziehen und Falten einer Metallfolie hergestellt ist.

9. Feder nach einem der vorhergehenden Ansprüche, **dadurch gekennzeichnet, dass** die starren Arme (B1, B2, B3, B4) und die Falze (P1, P2, P3) einstückig durch Schneiden, Tiefziehen und Falzen eines Bands mit konstanter Breite hergestellt sind.

10. Feder nach einem der vorhergehenden Ansprüche, **dadurch gekennzeichnet, dass** der zweite starre Arm (B2) und der dritte starre Arm (B3) im Wesentlichen gleiche Längen haben.

11. Feder nach Anspruch 1, **dadurch gekennzeichnet, dass** in einem Zustand vor jeglicher plastischer Verformung der Falze (P1, P2, P3) der erste starre Arm (B1) und der zweite starre Arm (B2) einen Winkel (α1) ungefähr gleich 14 Grad bilden.

12. Feder nach Anspruch 11, **dadurch gekennzeichnet, dass** in einem Zustand vor jeglicher plastischer Verformung der Falze der dritte starre Arm (B3) und der vierte starre Arm (B4) einen Winkel (α3) ungefähr gleich 19 Grad bilden.

13. Feder nach einem der vorhergehenden Ansprüche, **dadurch gekennzeichnet, dass** in dem Zustand der maximalen plastischen Verformung der Falze (P1, P2, P3) der dritte starre Arm (B3) und der vierte starre Arm (B4) im Wesentlichen ausgerichtet sind.

14. Feder nach einem der vorhergehenden Ansprüche, **dadurch gekennzeichnet, dass** in dem Zustand der maximalen plastischen Verformung der Falze (P1, P2, P3) der zweite starre Arm (B2) und der dritte starre Arm (B3) einen im Wesentlichen rechten Winkel (α2) bilden.

15. Feder nach Anspruch 11, **dadurch gekennzeichnet, dass** in dem Zustand der maximalen plastischen Verformung der Falze (P1, P2, P3) der erste starre Arm (B1) und der zweite starre Arm (B2) einen im Wesentlichen rechten Winkel (α1) bilden.

16. Feder nach einem der vorhergehenden Ansprüche, **dadurch gekennzeichnet, dass** sie aus einem Material hergestellt ist, das ausgewählt ist aus einer Gruppe umfassend insbesondere rostfreien Stahl, den Stahl X2CrNbCu21, den Stahl 304L, Gold, Blei, ein synthetisches Material, ein synthetisches Material mit einer Polymermatrix, verstärkt durch natürliche oder synthetische Fasern.

17. Feder nach einem der vorhergehenden Ansprüche, **dadurch gekennzeichnet, dass** sie aus einem Material hergestellt ist, dessen Bruchdehnung (A%) zwischen 30 und 60% enthalten ist, dessen Zugwiderstand (Rm) zwischen 400 MPa und 1000 MPa enthalten ist, und dessen konventionelle Streckgrenze (Rp0,2) zwischen 0 und 500 MPa enthalten ist.

18. Feder nach dem vorhergehenden Anspruch, **dadurch gekennzeichnet, dass** sie aus einem Material hergestellt ist, dessen Bruchdehnung (A%) zwischen 40 und 60% enthalten ist, dessen Zugwiderstand (Rm) zwischen 400 MPa und 700 MPa enthalten ist, und dessen konventionelle Streckgrenze (Rp0,2) zwischen 150 und 400 MPa enthalten ist.

19. Feder nach dem vorhergehenden Anspruch, **dadurch gekennzeichnet, dass** sie aus einem Material hergestellt ist, dessen Bruchdehnung (A%) zwischen 50 und 60% enthalten ist, dessen Zugwiderstand (Rm) zwischen 400 MPa und 600 MPa enthalten ist, und dessen konventionelle Streckgrenze (Rp0,2) zwischen 200 und 300 MPa enthalten ist.

20. Scheibenbremse (10) eines Automobilfahrzeugs, die Folgendes umfasst:
- eine Bremsscheibe (12), die sich in einer Ebene transversal zu einer Drehachse (A) der Scheibe mit axialer Orientierung erstreckt;
- einen Träger (14), der mit Bezug zu einem Rahmen des Fahrzeugs fest ist;
- wenigstens einen Bremsbelag (18), der eine Reibgarnitur (24) umfasst, von der eine transversale Reibfläche (25) mit einer zugeordneten Bremsbahn (22) der Scheibe (12) zusammenwirkt, wobei der Bremsbelag (18) in dem festen Träger (14) axial verschiebbar montiert ist zwischen einer aktiven vorderen Position, in der die Reibfläche (25) in Anlage gegen die zugeordnete ringförmige Bahn (22) der Scheibe (12) ist, und einer hinteren inaktiven Position, in der die Reibfläche (25) axial von der zugeordneten ringförmigen Bahn der Scheibe um ein bestimmtes Funktionsspiel (J1) beabstandet ist,
**dadurch gekennzeichnet, dass** sie wenigstens eine Feder (48) zur elastischen Rückholung des Bremsbelags (18) in Richtung seiner inaktiven Position umfasst, realisiert nach einem der Ansprüche 1 bis 16.

21. Scheibenbremse nach Anspruch 20, **dadurch gekennzeichnet, dass** die elastische Rückholfeder (48) zwischen dem Bremsbelag (18) und dem festen Träger (14) eingefügt ist.

22. Scheibenbremse (10) nach Anspruch 20, **dadurch gekennzeichnet, dass** der Bereich (50) zur Befestigung der elastischen Rückholfeder (48) an der Scheibenbremse befestigt ist durch axiales Einsetzen in ein Schiebeelement (28) des festen Trägers (14) mit axialer Orientierung.

23. Scheibenbremse (10) nach Anspruch 20 in Kombination mit Anspruch 2, **dadurch gekennzeichnet, dass** der erste starre Arm (B1) der elastischen Rückholfeder (48) befestigt ist durch axiales Einsetzen in eine Auskerbung (30) des festen Trägers (14) mit axialer Orientierung.

24. Scheibenbremse (10) nach Anspruch 23, **dadurch gekennzeichnet, dass** der wenigstens eine Bremsbelag (18) wenigstens ein laterales Ohr (26) zur Schiebeführung umfasst, das in einem axialen Schiebeelement (28) des festen Trägers (14) aufgenommen ist, und dass die Auskerbung (30) zur Befestigung in einem Boden des Schiebeelements (28) gebildet ist.

25. Scheibenbremse (10) nach Anspruch 23, **dadurch gekennzeichnet, dass** der Bremsbelag (18) wenigstens ein laterales Ohr (26) zur Schiebeführung umfasst, das in einem axialen Schiebeelement (28) des Trägers aufgenommen ist, und dass die Auskerbung (30) durch das Schiebeelement (28) gebildet ist.

26. Scheibenbremse (10) nach Anspruch 20, **dadurch gekennzeichnet, dass** sie ein Gleitelement (32) umfasst, das sich an die Wände des Schiebeelements (28) anschmiegt, und das an dem festen Träger (14) befestigt ist.

27. Scheibenbremse (10) nach einem der Ansprüche 22 bis 25, **dadurch gekennzeichnet, dass** der erste starre Arm (B1) der elastischen Rückholfeder (48) an der Scheibenbremse (12) einen Anschlag (60) umfasst, der in Kontakt ist mit einer gegenüberliegenden Fläche des festen Trägers (14), um die axiale Verschiebung der elastischen Rückholfeder (48) in der Richtung entsprechend der axialen Verlagerung des Bremsbelags (18) in Richtung seiner aktiven Bremsposition zu blockieren.

28. Ersatzset für eine Scheibenbremse eines Automobilfahrzeugs nach einem der Ansprüche 20 bis 27, **dadurch gekennzeichnet, dass** es wenigstens einen Bremsbelag (18) und zwei dem Bremsbelag (18) paarweise zugeordnete elastische Rückholfedern (48) umfasst, von denen jede nach einem der Ansprüche 1 bis 17 realisiert ist.

29. Ersatzset nach Anspruch 28, **dadurch gekennzeichnet, dass** es ferner zwei Federn (100) zur Montage des Bremsbelags in der Scheibenbremse umfasst.

## Claims

1. A spring (48) for elastically returning a brake shoe (18) of a disk brake (12) axially to an inactive position, said spring (48) including means for compensating wear play (J2) of a friction lining (24) of the brake shoe (18) that are deformed plastically when a travel of the brake shoe in an axial direction of movement as far as an active braking position is greater than a particular operating clearance (J1),
the return spring (48) successively including:
a portion (50) for fixing the return spring (48) to the disk brake (14) comprising a first rigid branch (B1);
a second rigid branch (B2) a proximal end (B2p) of which is connected to a distal end (B1d) of the first rigid branch B1) by a first bend (P1) plastically deformable about a first deformation axis (A1) orthogonal to the axial direction (A) of movement of the brake shoe (18) and parallel to the plane in which the second rigid branch (B2) lies; and
a third rigid branch (B3) a proximal end (B3p) of which is connected to a distal end (B2d) of the second rigid branch (B2) by a second bend (P2) plastically deformable about a second deformation axis (A2) parallel to the first deformation axis (A1),
**characterized in that**
the return spring (48) includes a fourth rigid branch (B4) a proximal end (B4p) of which is connected to a distal end (B3d) of the third rigid branch (B3) by a third bend (P3) plastically deformable about a third deformation axis (A3) parallel to the first deformation axis (A1) and that cooperates directly or indirectly with an associated portion of the brake shoe (18);
**in that** each rigid branch (B1, B2, B3, B4) is a strip that lies globally in a plane parallel to the first deformation axis (A1); and
**in that** the fourth rigid branch (B4) is transversely spaced (D) relative to the fixing portion (50).

2. The spring according to claim 1, **characterized in that** the first rigid branch (B1) extends parallel to the axial direction (A) of movement of the brake shoe.

3. The spring according to any preceding claim, **characterized in that** each rigid branch (B1, B2, B3, B4) is straight.

4. The spring according to any preceding claim, **characterized in that** each rigid branch (B1, B2, B3, B4) includes stiffening means (Z1, Z2, Z3, Z4).

5. The spring according to any preceding claim, **characterized in that** each plastically deformable bend (P1, P2, P3) includes an area (F1, F2, F3) of weakened mechanical properties.

6. The spring as claimed in claim 5, **characterized in that** each plastically deformable bend (P1, P2, P3) is a bent portion of a strip including a window (F1, F2, F3) oriented parallel to the first deformation axis (A1).

7. The spring according to any preceding claim, **characterized in that** it is produced in one piece by cutting and shaping a sheet of material.

8. The spring as claimed in claim 7, **characterized in that** it is produced in one piece by cutting, pressing and bending a sheet of metal.

9. The spring according to any preceding claim, **characterized in that** the rigid branches (B1, B2, B3, B4) and the bends (P1, P2, P3) are produced in one piece by cutting, pressing and bending a strip of constant width.

10. The spring according to any preceding claim, **characterized in that** the second rigid branch (B2) and the third rigid branch (B3) are of substantially equal length.

11. The spring as claimed in claim 1, **characterized in that**, in a state preceding any plastic deformation of the bends (P1, P2, P3), the first rigid branch (B1) and the second rigid branch (B2) form an angle (α1) equal to approximately 14 degrees.

12. The spring as claimed in claim 11, **characterized in that**, in a state preceding any plastic deformation of the bends, the third rigid branch (B3) and the fourth rigid branch (B4) form an angle (α3) equal to approximately 19 degrees.

13. The spring according to any preceding claim, **characterized in that**, in the state of maximum plastic deformation of the bends (P1, P2, P3), the third rigid branch (B3) and the fourth rigid branch (B4) are substantially aligned.

14. The spring according to any preceding claim, **characterized in that**, in the state of maximum plastic deformation of the bends (P1, P2, P3), the second rigid branch (B2) and the third rigid branch (B3) form an angle (α2) that is substantially a right angle.

15. The spring as claimed in claim 11, **characterized in that**, in the state of maximum plastic deformation of the bends (P1, P2, P3), the first rigid branch (B1) and the second rigid branch (B2) form an angle (α1) that is substantially a right angle.

16. The spring according to any preceding claim, **characterized in that** it is made from a material selected from a group including stainless steel, X2CrNbCu21 steel, 304L steel, gold, lead, a synthetic material, a synthetic material with a polymer matrix reinforced by natural or synthetic fibers.

17. The spring according to any preceding claim, **characterized in that** it is made from a material the breaking strain of which is between 30% and 60%, the tensile strength of which is between 400 MPa and 1,000 MPa, and the 0.2% strain of which is between 0 and 500 MPa.

18. The spring according to the preceding claim, **characterized in that** it is made from a material the breaking strain of which is between 40 and 60%, the tensile strength of which is between 400 Mpa and 700 MPa and the 0.2% strain of which is between 150 and 400 MPa.

19. The spring according to the preceding claim, **characterized in that** it is made from a material the breaking strain of which is between 50 and 60%, the tensile strength of which is between 400 MPa and 600 MPa, and the 0.2% strain of which is between 200 and 300 MPa.

20. A motor vehicle disk brake (10) that includes:
a brake disk (12) that lies in a plane transverse to an axially oriented axis (A) of rotation of the disk;
a support (14) fixed relative to a chassis of the vehicle,
at least one brake shoe (18) that includes a friction lining (24) a transverse friction face (25) of which cooperates with an associated braking track (22) of the disk (12), the brake shoe (18) being mounted to slide axially in the fixed support (14) between an active front position in which said friction face (25) bears against the associated annular track (22) of the disk (12) and an inactive rear position in which said friction face (25) is spaced axially from said associated annular track of the disk by a particular operating clearance (J1),
**characterized in that** the disk brake includes at least one return spring (48) for elastically returning the brake shoe (18) to its inactive position according to any preceding claims 1 to 16.

21. The disk brake (10) according to claim 20, **characterized in that** the return spring (48) is disposed between the brake shoe (18) and the fixed support (14).

22. The disk brake (10) according to claim 20, **characterized in that** the portion (50) for fixing the return spring (48) to the disk brake is fixed by axial insertion in an axially oriented slide (28) of the fixed support (14).

23. The disk brake (10) according to claim 20, taken into account with claim 2 **characterized in that** the first rigid branch (B1) of the return spring (48) is fixed by axial insertion in an axially oriented notch (30) of the fixed support (14).

24. The disk brake (10) according to claim 23, **characterized in that** said at least one brake shoe (18) includes at least one lateral lug (26) for guiding sliding thereof that is received in an axial slide (28) of the fixed support (14) and said fixing notch (30) is formed in a back of the slide (28).

25. The disk brake (10) according to claim 23, **characterized in that** the brake shoe (18) includes at least one lateral lug (26) for guiding sliding thereof that is received in an axial slide (28) of the support and said notch (30) is formed by the slide (28).

26. The disk brake (10) according to claim 20, further including a slider (32) that espouses the walls of the slide (28) and is fixed to the fixed support (14).

27. The disk brake (10) according to any of claims 22 to 25, **characterized in that** the first rigid branch (B1) of the return spring (48) on the disk brake (12) includes a stop (60) that is in contact with a facing face of the fixed support (14) to block the axial sliding of the return spring (48) in the direction corresponding to the axial movement of the brake shoe (18) to its active braking position.

28. A replacement kit for a motor vehicle disk brake according to any of claims 20 to 27, **characterized in that** it includes at least one brake shoe (18) and two return springs (48) matched to said brake shoe (18) that are made according to any of claims 1 to 17.

29. The replacement kit as claimed in claim 28, further including two springs (100) for mounting the brake shoe in the disk brake.
